(19) Europäisches Patentamt
European Patent Office
Office européen des brevets

(11) EP 2 315 389 B1

# (12) EUROPEAN PATENT SPECIFICATION

(45) Date of publication and mention of the grant of the patent:
**17.09.2014 Bulletin 2014/38**

(51) Int Cl.:
***H04L 9/08*** (2006.01) ***H04L 9/30*** (2006.01)

(21) Application number: **10186315.7**

(22) Date of filing: **18.10.1996**

## (54) Key agreement and transport protocol with implicit signatures

Schlüsselvereinbarungs- und Transportprotokoll mit impliziten Signaturen

Accord-clé et protocole de transport avec signatures implicites

(84) Designated Contracting States:
**CH DE FR GB LI**

(43) Date of publication of application:
**27.04.2011 Bulletin 2011/17**

(62) Document number(s) of the earlier application(s) in accordance with Art. 76 EPC:
**09162881.8 / 2 104 268**
**07000020.3 / 1 768 300**
**96944186.4 / 0 873 617**

(73) Proprietor: **Certicom Corp.**
**Mississauga, Ontario L4W 0B5 (CA)**

(72) Inventors:
- **Vanstone, Scott Alexander**
  **Mississauga Ontario L4W 5L1 (CA)**
- **Menezes, Alfred John**
  **Waterloo, Ontario N2J 4S3 (CA)**
- **Qu, Minghua**
  **Mississauga, ON L5M 5G7 (CA)**

(74) Representative: **Finnie, Peter John et al**
**Gill Jennings & Every LLP**
**The Broadgate Tower**
**20 Primrose Street**
**London EC2A 2ES (GB)**

(56) References cited:
**EP-A- 0 393 806** **EP-A1- 0 639 907**
**EP-A1- 0 739 105** **DE-A1- 3 915 262**

- **MATSUMOTO T ET AL: "ON SEEKING SMART PUBLIC-KEY-DISTRIBUTION SYSTEMS", TRANSACTIONS OF THE INSTITUTE OF ELECTRONICS AND COMMUNICATION ENGINEERS OF JAPAN, SECTION E, INST. OF ELECTRONICS & COMMUNIC. ENGINEERS OF JAPAN. TOKYO, JP, vol. E69, no. 2, February 1986 (1986-02), pages 99-105, XP002056002,**
- **BOYD C ET AL PIEPRZYK J ET AL: "DESIGN AND ANALYSIS OF KEY EXCHANGE PROTOCOLS VIA SECURE CHANNEL IDENTIFICATION", ADVANCES IN CRYPTOLOGY - ASIACRYPT '94. 4TH. INTERNATIONAL CONFERENCE ON THE THEORY AND APPLICATIONS OF CRYPTOLOGY, WOLLONGONG, AUSTRALIA, NOV. 28 - DEC. 1, 1994. PROCEEDINGS, PROCEEDINGS OF THE CONFERENCE ON THE THEORY AND APPLICATIONS OF CRYPTOLOGY, vol. CONF. 4, 28 November 1994 (1994-11-28), pages 171-181, XP000527595, ISBN: 3-540-59339-X**
- **Alfred J. Menezes ET AL: "Some New Key Agreement Protocols Providing Implicit Authentication", Selected Areas in Cryptography SAC '95, 18 May 1995 (1995-05-18), pages 22-32, XP055078224, Ontario, Canada**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 315 389 B1

## Description

The present invention relates generally to key agreement protocols for transfer and authentication of encryption keys.

## BACKGROUND

To retain privacy during the exchange of information it is well known to encrypt data using a key. The key must be chosen so that the correspondents are able to encrypt and decrypt messages but such that an interceptor cannot determine the contents of the message.

In a secret key cryptographic protocol, the correspondents share a common key that is secret to them. This requires the key to be agreed upon between the correspondents and for provision to be made to maintain the secrecy of the key and provide for change of the key should the underlying security be compromised.

Public key cryptographic protocols were first proposed in 1976 by Diffie-Hellman and utilized a public key made available to all potential correspondents and a private key known only to the intended recipient. The public and private keys are related such that a message encrypted with the public key of a recipient can be readily decrypted with the private key but the private key cannot be derived from the knowledge of the plaintext, ciphertext and public key.

Key establishment is the process by which two (or more) parties establish a shared secret key, called the session key. The session key is subsequently used to achieve some cryptographic goal, such as privacy. There are two kinds of key agreement protocol; key transport protocols in which a key is created by one party and securely transmitted to the second party; and key agreement protocols, in which both parties contribute information which jointly establish the shared secret key. The number of message exchanges required between the parties is called the number of passes. A key establishment protocol is said to provide implicit key authentication (or simply key authentication) if one party is assured that no other party aside from a specially identified second party may learn the value of the session key. The property of implicit key authentication does not necessarily mean that the second party actually possesses the session key. A key establishment protocol is said to provide key confirmation if one party is assured that a specially identified second party actually has possession of a particular session key. If the authentication is provided to both parties involved in the protocol, then the key authentication is said to be mutual; if provided to only one party, the authentication is said to be unilateral.

There are various prior proposals which claim to provide implicit key authentication.

Examples include the Nyberg-Rueppel one-pass protocol and the Matsumoto-Takashima-Imai (MTI) and the Goss and Yacobi two-pass protocols for key agreement.

The prior proposals ensure that transmissions between correspondents to establish a common key are secure and that an interloper cannot retrieve the session key and decrypt the ciphertext. In this way security for sensitive transactions such as transfer of funds is provided.

For example, the MTI/A0 key agreement protocol establishes a shared secret K, known to the two correspondents, in the following manner:

1. During initial, one-time setup, key generation and publication is undertaken by selecting and publishing an appropriate system prime p and generator $\alpha \in Z^*_p$ in a manner guaranteeing authenticity. Correspondent A selects as a long-term private key a random integer "a", l <a<p-1, and computes a long-term public key $z_A = \alpha^a \bmod p$. B generates analogous keys b, $z_B$. A and B have access to authenticated copies of each other's long-term public key.
2. The protocol requires the exchange of the following messages.

$$A \longrightarrow B: \alpha^x \bmod p \qquad (1)$$

$$A \longleftarrow B: \alpha^y \bmod p \qquad (2)$$

The values of x and y remain secure during such transmission as it is impractical to determine the exponent even when the value of α and the exponentiation is known provided of course that p is chosen sufficiently large.

3. To implement the protocol the following steps are performed each time a shared key is required.

   (a) A chooses a random integer x, $1 \leq x \leq p-2$, and sends B message (1) i.e. $\alpha^x \bmod p$.
   (b) B chooses a random integer y, $1 \leq y \leq p \leq 2$, and sends A message (2) i.e. $\alpha^y \bmod p$.
   (c) A computes the key $K = (\alpha^y)^a z_B{}^x \bmod p$
   (d) B computes the key $K = (\alpha^x)^b z_A{}^Y \bmod p$
   (e) Both share the key $K - \alpha^{bx+ay}$

In order to compute the key K, A must use his secret key a and the random integer x, both of which are known only to him. Similarly, B must use her secret key b and random integer y to compute the session key K. Provided the secret keys a, b remain uncompromised, an interloper cannot generate a session key identical to the other correspondent. Accordingly, any ciphertext will not be decipherable by both correspondents.

As such this and related protocols have been considered satisfactory for key establishment and resistant to conventional eavesdropping or man-in-the middle attacks.

In some circumstances, it may be advantageous for an adversary to mislead one correspondent as to the true identity of the other correspondent.

In such an attack an active adversary or interloper E modifies messages exchanged between A and B, with the result that B believes that he shares a key K with E while A believes that she shares the same key K with B. Even though E does not learn the value of K the misinformation as to the identity of the correspondents may be useful.

A practical scenario where such an attack may be launched successfully is the following. Suppose that B is a bank branch and A is an account holder. Certificates are issued by the bank headquarters and within the certificate is the account information of the holder. Suppose that the protocol for electronic deposit of funds is to exchange a key with a bank branch via a mutually authenticated key agreement. Once B has authenticated the transmitting entity, encrypted funds are deposited to the account number in the certificate. If no further authentication is done in the encrypted deposit message (which might be the case to save bandwidth) then the deposit will be made to E's account.

"On seeking Smart Public Key-Distribution Systems", Matsumoto et al, IEICE TRANSACTIONS (1976-1990) Vol.E69-E No.2 pp.99-106 20 February 1986 relates to the problem of how to distribute the common keys. The paper discusses a sort of scheme (direct schemes) that smartly provides different keys in different communications. Such a property is not attained via the basic scheme for the public key distribution systems proposed by Diffie and Hellman. The paper shows that the recently introduced five direct schemes are classified into three sets (called sequences) of infinite schemes, and points out that there are some tight relations among the sequences. It is clarified which is the best in the three sequences by a systematic evaluation of the complexities for the normal update and for the deliberate forgery of the shared common keys.

EP 0639907 discloses a digital signature method based on the discrete logarithm problem is provided that allows message recovery. The message x is transformed according to the rule e = x g-r mod p, where r is a secret value generated by the signer. A value y is then calculated according to the rule y = r + s e mod q, where s is the signer's secret key. The signature of x consists of the pair (e,y). The verifier recovers the message x according the the rule x = gy ke e mod p, where k is the signer's public key. The validation of x can be based on some redundancy contained in x. Alternatively, a conventional verification equation can be constructed by using the signature method together with a hash function H. In addition, a key agreement method based on the signature method is provided which establishes with a single transmission pass a shared secret key K between two parties A and B in an authenticated fashion.

GENERAL

In one aspect the present invention may provide a protocol in which the above disadvantages are obviated or mitigated.

According to one aspect there may be provided a method of establishing a session key as set out in claim 1 of the accompanying claims.

According to another aspect there is provided a cryptographic unit as set out in claim 16.

According to another aspect there is provided a device as set out in claim 17.

BRIEF DESCRIPTION OF DRAWING

Embodiments of the invention will now be described by way of example only with reference to the accompanying drawings in which:

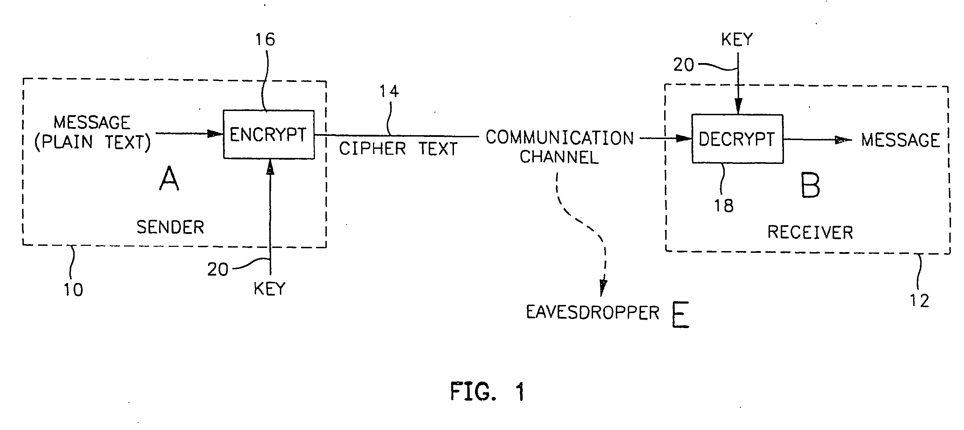

Figure 1 is a schematic representation of a data communication system.

DETAILED DESCRIPTION

Referring therefore to Figure 1, a pair of correspondents, 10,12, denoted as correspondent A and correspondent B, exchange information over a communication channel 14. A cryptographic unit 16,18 is interposed between each of the correspondents 10, 12 and the channel 14. A key 20 is associated with each of the cryptographic units 16,18 to convert plaintext carried between each unit 16,18 and its respective correspondent 10,12 into ciphertext carried on the channel 14.

In operation, a message generated by correspondent A, 10, is encrypted by the unit 16 with the key 20 and transmitted and transmitted as ciphertext over channel 14 to the unit 18.

The key 20 operates upon the ciphertext in the unit 18 to generate a plaintext message for the correspondent B, 12. Provided the keys 20 correspond, the message received by correspondent 12 will be that sent by the correspondent 10.

In order for the system shown in Figure 1 to operate, it is necessary for the keys 20 to be identical and therefore a key agreement protocol is established that allows the transfer of information in a public manner to establish the identical keys. A number of protocols are available for such key generation and are variants of the Diffie-Hellman key exchange. Their purpose is for parties A and B to establish a secret session key K.

The system parameters for these protocols are a prime number p and a generator $\alpha$ of the multiplicative group $Z^*_p$. Correspondent A has private key a and public key $p_A = \alpha^a$. Correspondent B has private key b and public key $p_B = \alpha^b$. In the protocol exemplified below, $text_A$ refers to a string of information that identifies party A. If the other correspondent B possesses and authentic copy of correspondent A's public key, then $text_A$ will contain A's public-key certificate, issued by a trusted center; correspondent B can use his authentic copy of the trusted center's public key to verify correspondent A's certificate, hence obtaining an authentic copy of correspondent A's public key.

In each example below it is assumed that, an interloper E wishes to have messages from A identified as having originated from E herself. To accomplish this, E selects a random integer e, $1 \le e \le p-2$, computes $p_E=(p_A)^e=\alpha^{ae} \bmod p$, and gets this certified as her public key. E does not know the exponent ae, although she knows e. By substituting $text_E$ for $text_A$, the correspondent B will assume that the message originates from E rather than A and use E's public key to generate the session key K. E also intercepts the message from B and uses his secret random integer e to modify its contents. A will then use that information to generate the same session key allowing A to communicate with B.

To avoid interloper E convincing B that he is communicating with E, the following protocol is adapted.

The purpose of the protocol is for parties A and B to establish a session key K. The protocols exemplified are role-symmetric and non-interactive.

The system parameters for this protocol are a prime number p and a generator $\alpha$ of the multiplicative group $Z^*_p$. User A has private key a and public key $p_A = \alpha^a$. User B has private key b and public key $p_B = \alpha^b$.

First Protocol

1. A picks a random integer x, $1 \le x \le p-2$, and computes $r_A = \alpha^x$ and a signature $s_A = x - r_A a \alpha^a \bmod (p-1)$. A sends $\{r_A, s_A, text_A\}$ to B.
2. B picks a random integer y, $1 \le y \le p-2$, and computes $r_B\ \alpha^y$ and a signature $s_B = y - r_b b \alpha^b \bmod (p-1)$. B sends $\{r_B, s_B, text_B\}$ to A.
3. A computes $\alpha^{s_B} (p_B)^{r_B \alpha^b}$ and verifies that this is equal to $r_B$. A computes the session key $K = (r_B)^x = \alpha^{xy}$
4. B computes $\alpha^{s_A} (p_A)^{r_A \alpha^a}$ and verifies that this is equal to $r_A$. B computes the session key $K = (r_A)^y = \alpha^{xy}$.

Should E replace $text_A$ with $text_E$, B will compute $\alpha^{s_A}(p_E)^{r_A \alpha^a}$ which will not correspond with the transmitted value of $r_A$. B will thus be alerted to the interloper E and will proceed to initiate another session key.

One drawback of the first protocol is that it does not offer perfect forward secrecy. That is, if an adversary learns the long-term private key a of party A, then the adversary can deduce all of A's past session keys. The property of perfect forward secrecy can be achieved by modifying Protocol 1 in the following way.

Modified First Protocol

In step 1, A also sends $\alpha^{x_1}$ to B, where $x_1$ is a second random integer generated by A Similarly, in step 2, B also sends $\alpha^{y_1}$ to A, where $y_1$ is a random integer. A and B now compute the key $K= \alpha^{xy} \oplus \alpha^{x_1 y_1}$.

Another drawback of the first protocol is that if an adversary learns the private random integer x of A, then the adversary can deduce the long-term private key a of party A from the equation $s_A = x - r_A a \alpha^a \bmod p-1$. This drawback is primarily theoretical in nature since a well designed implementation of the protocol will prevent the private integers from being disclosed.

Second Protocol

A second protocol set out below addresses these two drawbacks.

1. A picks a random integer x, $1 \le x \le p-2$, and computes $(p_B)^x$, $\alpha^x$ and a signature $s_A = x + a\alpha^a(p_B)^x \bmod (p-1)$. A sends $\{\alpha^x, s_A, text_A\}$ to B.
2. B picks a random integer y, $1 \le y \le p-2$, and computes $(p_A)^y$, $\alpha^y$ and a signature $s_B = y + b\alpha^b(p_A)^y \bmod (p-1)$. B sends $\{\alpha^y, s_B, text_B\}$ to A.
3. A computes $(\alpha^y)^a$ and verifies that $\alpha^{s_B} (p_B)^{-\alpha^b \alpha^{ay}} = \alpha^y$. A then computes session key $K = \alpha^{ay}(p_B)^x$.
4. B computes $(\alpha^x)^b$ and verifies that $\alpha^{s_A} (p_A)^{-\alpha^a \alpha^{bx}} = \alpha^x$. A then computes session key $K = \alpha^{bx}(p_A)^y$.

The second protocol improves upon the first protocol in the sense that it offers perfect forward secrecy. While it is still the case that disclosure of a private random integer x allows an adversary to learn the private key a, this will not be a problem in practice because A can destroy x as soon as she uses it in step 1 of the protocol.

If A does not have an authenticated copy of B's public key then B has to transmit a certified copy of his key to B at the beginning of the protocol. In this case, the second protocol is a three-pass protocol.

The quantity $s_A$ serves as A's signature on the value $\alpha^x$. This signature has the novel property that it can only be verified by party B. This idea can be generalized to all ElGamal-like signatures schemes.

The first and second protocols above can be modified to improve the bandwidth requirements and computational efficiency of the key agreement. The modified protocols are described below as Protocol 1' and Protocol 2'. In each case, A and B will share the common key $\alpha^{s_A s_B}$.

**Protocol 1'**

1. A picks a random integer x, $1 \le x \le p-2$, and computes $r_A = \alpha^a$ and $s_A = x + r_A a \alpha^a \bmod (p-1)$. A sends $\{r_A, text_A\}$ to B.

2. B picks a random integer y, $1 \leq y \leq p-2$, and computes $r_B = \alpha^y$ and $s_B = y + r_B b \alpha^b \bmod (p-1)$. B sends $\{r_B, text_B\}$ to A.
3. A computes $K = (r_B (p_B)^{r_B \alpha^b})^{s_A}$ which is equivalent to $\alpha^{s_A s_B}$.
4. B computes $K = (r_A (p_A)^{r_A \alpha^a})^{s_B}$ which is also equivalent to $\alpha^{s_A s_B}$.

A and B thus share the common key but it will be noted that the signatures $s_A$ and $s_B$ need not be transmitted.

**Protocol 2'**

1. A picks a random integer x, $1 \leq x \leq p-2$, and computes $(p_B)^x$, $\alpha^x$ and $s_A = x + a(p_B)^x \bmod (p-1)$. A sends $\{\alpha^x, text_A\}$ to B.
2. B picks a random integer y, $1 \leq y \leq p-2$, and computes $(p_A)^y$, $\alpha^y$ and $s_B = y + b(p_A)^y \bmod (p-1)$. B sends $\{\alpha^y, text_B\}$ to A.
3. A computes $(\alpha^y)^a$ and $K = (\alpha^y (p_B)^{\alpha^{b\alpha ay}})^{s_A}$, i.e. $\alpha^{s_A s_B}$.
4. B computes $(\alpha^x)^b$ and $K = (\alpha^x (p_A)^{\alpha^{a\alpha bx}})^{s_B}$ i.e. $\alpha^{s_A s_B}$.

Again therefore the transmission of $s_A$ and $s_B$ is avoided.

A further protocol is available for parties A and B to establish a session key K.

Third Protocol

The system parameters for this protocol are a prime number p and a generator $\alpha$ for the multiplicative group $Z^*_p$. User A has private key a and public key $p_A = \alpha^a$. User B has private key b and public key $p_B = \alpha^b$.

1. A picks two random integers x, $x_1$, $1 \leq x, x_1 \leq p-2$, and computes $r_{x1} = \alpha^{x1}$, $r_A = \alpha^x$ and $(r_A)^{r_{x1}}$, then computes a signature $s_A = x r_{x1} - (r_A)^{r_{x1}} a \alpha^a \bmod (p-1)$. A sends $\{r_A, s_A, \alpha^{x1}, text_A\}$ to B.
2. B picks two random integers y, $y_1$ $1 \leq y, y_1 \leq p-2$, and computes $r_{y1} = \alpha^{y1}$, $r_B = \alpha^y$ and $(r_B)^{r_{y1}}$, then computes a signature $s_B = y r_{y1} - (r_B)^{r_{y1}} b \bmod (p-1)$. A sends $\{r_B, s_B, \alpha^{y1}, text_B\}$ to A.
3. A computes $\alpha^{s_B} (p_B)^{(r_B)^{r_{y1}}}$ and verifies that this is equal to $(r_B)^{r_{y1}}$. A computes session key $K = (\alpha^{y1})^{x1} = \alpha^{x1 \cdot y1}$
4. B computes $\alpha^{s_A} (p_A)^{(r_A)^{r_{x1}}}$ and verifies that this is equal to $(r_A)^{r_{x1}}$. B computes session key $K = (\alpha^{x1})^{y1} = \alpha^{x1 y1}$

In these protocols, $(r_A, s_A)$ can be thought of as the signature of $r_{x1}$ with the property that only A can sign the message $r_{x1}$.

Key Transport Protocol

The protocols described above permit the establishment and authentication of a session key K. It is also desirable to establish a protocol in which permits A to transport a session key K to party B. Such a protocol is exemplified below.

1. A picks a random integer x, $1 \leq x \leq p-2$ and computes $r_A = \alpha^x$ and a signature $s_A = x - r_A a \alpha^a \bmod (p-1)$. A computes session key $K = (p_B)^x$ and sends $\{r_A, s_A, text_A\}$ to B.
2. B computes $\alpha^{s_A} (p_A)^{r_A \alpha^a}$ and verifies that this quantity is equal to $r_A$. B computes session key $K = (r_A)^b$.

Modified Key Transport Protocol

The above protocol may be modified to reduce the bandwidth by avoiding the need to transmit the signature $s_A$ as follows:

1. A picks a random integer x, $1 \leq x \leq p-2$, and computes $r_A = \alpha^x$ and $s_A = x - r_A a \alpha^a \bmod (p-1)$. A computes $K = (p_B)^{s_A}$ and sends $(r_A, text_A)$ to B.
2. B computes $K = (\alpha^x (p_A)^{-r_A \alpha^a})^b = \alpha^{b s_A}$

All one-pass key transport protocols have the following problem of replay. Suppose that a one-pass key transport protocol is used to transmit a session key K from A to B as well as some text encrypted with the session key K. Suppose that E records the transmission from A to B. If E can at a later time gain access to B's decryption machine (but not the internal contents of the machine, such as B's private key), then, by replaying the transmission to the machine, E can recover the original text. (In this scenario, E does not learn the session key K).

This replay attack can be foiled by usual methods, such as the use of timestamps. There are, however, some practical situations when B has limited computational resources, in which it is more suitable at the beginning of each session, for B to transmit a random bit string k to A. The session key that is used to encrypt the text is then $k \oplus K$, i.e. k XOR'd with K.

The signing equation $s_A = x - r_A a \alpha^a$ where $r_a = \alpha^x$ in protocol 1, and the key transportation protocols; $r_A = \alpha^{xb}$ in protocol 2, can be replaced with several variants. Some of them are:

$$r_A = s_A x + z$$

$$s_A = x\alpha^a + a r_A$$

$$s_A = xr_A + a\alpha^a$$

$$1 = ar_A + xs_A$$

All the protocols discussed above have been described in the setting of the multiplicative group $Z^*_p$. However, they can all be easily modified to work in any finite group in which the discrete logarithm problem appears intractable. Suitable choices include the multiplicative group of a finite filed (in particular the finite field $GF(2^n)$), subgroups of $Z^*_p$ of order q, and the group of points on an elliptic curve defined over a finite field. In each case, an appropriate generator a will be used to define the public keys.

The protocols discussed above can also be modified in a straightforward way to handle the situation when each user picks their own system parameters p and $\alpha$ (or analogous parameters if a group other than $Z^*_p$ is used).

In the above protocols, a signature component of the general form $s_A = x + r_a.a.\alpha^a$ has been used.

The protocols may be modified to use a simpler signature component of the general form $s_A = x + r_a.a$ without jeopardizing the security.

Examples of such protocols will be described below using the same notation although it will be understood that the protocols could be expressed in alternative notation if preferred.

**Protocol 1"**

This protocol will be described using an implementation in the multiplicative group $Z^*_p$ with the following notation:

p is a prime number,
$\alpha$ is a generator of $Z^*_p$,
a and b are party A's and B's respective long-term private key,
$\alpha^a$ mod p is party A's long-term private key,
$\alpha^b$ mod p is party B's long-term private key,
x is a random integer selected by A as a short-term private key,
$r_a = \alpha^x$ mod p is party A's short-term public key,
y is a random integer selected by B as a short-term private key,
$r_b = \alpha^y$ mod p is party B's short-term public key,
$\overline{r_a}$ is an integer derived from $r_a$ and is typically the 80 least significant bits of $r_a$,
$\overline{r_b}$ is an integer derived from $r_b$ and is typically the 80 least significant bits of $r_b$.

To implement the protocol,

1. A sends $r_a$ to B.

2. B sends $r_B$ to A.

3. A computes $s_A = x + \overline{r_a}$ .a mod (p-1).

4. A computes the session key K where $K = (\alpha^y(\alpha^b)^{\overline{r_b}})^{s_A}$ mod p.

5. B computes $s_B = y + \overline{r_b}$ .b mod (p-1).

6. B computes the session key K where $K = (\alpha^x(\alpha^a)^{\overline{r_a}})^{s_B}$ mod p.

7. The shared secret is $\alpha^{s_B s_A}$ mod p.

In this protocol, the bandwidth requirements are again reduced by the signature components combine the short and long-term keys of the correspondent to inhibit an attack by an interloper.

The above protocol may also be implemented using a subgroup of $Z^*_p$. In this case, q will be a prime divisor of (p- 1) and g will be an element of order p in $Z^*_p$.

A's and B's public keys will be of the form $g^a$, $g^b$ respectively and the short-term keys $r_a$, $r_b$ will be of the form $g^x$, $g^y$.

The signature components $s_A$, $s_B$ are computed mod q and the session key K computed mod q as before. The shared secret is then $g^{s_B s_A}$ mod p.

As noted above, the protocols may be implemented in groups other than $Z^*_p$ and a particularly robust group is the group of points on an elliptic curve over a finite field. An example of such an implementation is set out below as protocol 1"'.

**Protocol 1"'**

The following notation is used:

E is an elliptic curve defined over Fq,
P is a point of prime order n in E(Fq),
$d_a$ (1<da<n-1) is party A's long-term private key,
$d_b$ ($1<d_b<n-1$) is party B's long-term private key,
$Q_a = d_aP$ is party A's long-term public key,
$Q_b = d_bP$ is party B's long-term public key,
k(1<k<n-1) is party A's short-term private key,
$r_a = kP$ is party A's short-term public key,
m (1<m<n-1) is party B's short-term private key,
$r_b = mP$ is party B's short-term public key,
$\overline{r_a}$ and $\overline{r_b}$ respectively are bit strings, for example the 80 least significant bits of the x co-ordinate of $r_a$ and $r_b$.

To implement the protocol:

1. A sends $r_a$ to B.

2. B sends $r_b$ to A

3. A computes $s_A = (k + \overline{r_a} .d_a) \bmod n$.

4. A computes the session key K where $K=s_b(r_b + \overline{r_b} Q_b)$

5. B computes $s_b = (m + \overline{r_b} d_b) \bmod n$.

6. B computes the session key K where $K=sb(r_a + \overline{r_a} Q_a)$.

7. The shared secret is $s_a s_b P$.

Again, it will be noted that it is not necessary to send the signature components $s_A$, $s_B$ between the correspondent but the short and long-term keys of the correspondents are combined by the form of the components. (It will be appreciated that the notation m has been substituted for x,y in the previous examples to avoid confusion with the co-ordinate (x,y) of the points on the curve).

## Claims

**1.** A method of establishing a session key K at a correspondent A in a public key data communication system, the session key K for use in communication with a correspondent B over a communication channel, said correspondent A having a private key a and a public key $p_A$, wherein said public key $p_A$ is derived from a generator $\alpha$ of a group and said private key a, said method comprising:

said correspondent A selecting a first random integer x and exponentiating said generator $\alpha$ to obtain a first exponentiated function of the form $\alpha^x$;
said correspondent A generating a signature $s_A$ by combining said random integer x, said first exponentiated function and said private key a;
said correspondent A sending to said correspondent B a message including said first exponentiated function;
said correspondent A receiving from said correspondent B a message including a second exponentiated function of the form $\alpha^y$, wherein y is a second random integer selected by said correspondent B;
said correspondent A constructing said session key K by exponentiating public information of said correspondent B with the signature $s_A$;
wherein said signature $s_A$ is not transmitted by said correspondent A; and
wherein said signature $s_A$ of said correspondent A is of the form of one of:

$$x + \overline{r_A}\ a \bmod G;$$

$$x + r_A a \bmod G;$$

wherein $r_A$ is said exponentiated function, $\overline{r_A}$ is an integer derived from said exponentiated function, $p_B$ is a public key of said correspondent B, and G is an order of said generator $\alpha$.

**2.** A method of claim 1 wherein said message sent by said correspondent A includes an identification of said correspondent A.

**3.** A method according to any one of claims 1 or 2 wherein said message received by said correspondent A includes an identification of said correspondent B.

**4.** A method according to any one of the preceding claims wherein said first random integer x and said second random integer y are selected such that $1 \leq x \leq G - 1$ and $1 \leq y \leq G-1$.

**5.** A method according to any one of the preceding claims wherein said generator $\alpha$ is a generator of a multiplicative group $Z^*_p$, wherein p is a prime number.

**6.** A method according to claim 5 wherein said session key K is of the form $\alpha^{s_A s_B}$, wherein $s_B$ is a signature generated by said correspondent B and obtained by combining said second random integer y, said second exponentiated function and a private key b of said correspondent B.

**7.** A method according to any one of claims 1 to 4 wherein said generator $\alpha$ is a point P on an elliptic curve defined over a finite field Fq, and wherein exponentiation is performed by scalar multiplication on said elliptic curve.

**8.** A method according to claim 7 wherein said signature $s_A$ is generated by utilizing a bit string of a coordinate of said first exponentiated function.

**9.** A method according to claim 8 wherein said bit string comprises bits of the x coordinate of said first exponentiated function.

**10.** A method according to claim 9 wherein said bits of the x coordinate are least significant bits.

**11.** A method according to claim 10 wherein said bits of the x coordinate are the 80 least significant bits.

**12.** A method according to any one of claims 8 to 11, wherein said session key K is of the form $s_A s_B P$, wherein $s_B$ is a signature generated by said correspondent B and obtained by combining said second random integer y, said second exponentiated function and a private key b of said correspondent B.

**13.** A method according to any one of claims 8 to 12, wherein the point P is of prime order.

**14.** A method according to claim 7, wherein said correspondent A constructs said session key K by computing $s_A(r_B + \overline{r_B}\, p_B)$, wherein $r_B$ is said second exponentiated function and $\overline{r_B}$ is an integer derived from said second exponentiated function.

**15.** A method according to any one of claims 8 to 14, wherein the arithmetic is replaced with arithmetic on an elliptic curve defined over a finite field.

**16.** A cryptographic unit for carrying out the method of any one of the preceding claims.

**17.** A device comprising the cryptographic unit of claim 16.

**Patentansprüche**

**1.** Verfahren zum Erstellen eines Sitzungsschlüssels K bei einem Korrespondenten A in einem Datenkommunikationssystem mit öffentlichem Schlüssel, wobei der Sitzungsschlüssel K einer Verwendung in einer Kommunikation mit einem Korrespondenten B über einen Kommunikationskanal dient, wobei der Korrespondent A einen privaten Schlüssel a und einen öffentlichen Schlüssel $p_A$ aufweist, wobei der öffentliche Schlüssel $p_A$ von einem Generator $\alpha$ einer Gruppe und dem privaten Schlüssel a abgeleitet wird, wobei das Verfahren aufweist:

dass der Korrespondent A eine erste Zufallsganzzahl x auswählt und den Generator $\alpha$ potenziert, um eine erste Exponentialfunktion der Form $\alpha^x$ zu erhalten,
dass der Korrespondent A eine Signatur $s_A$ durch Kombinieren der Zufallsganzzahl x, der ersten Exponentialfunktion und des privaten Schüssels a erzeugt,
dass der Korrespondent A an den Korrespondenten B eine Nachricht sendet, welche die erste Exponentialfunktion enthält,
dass der Korrespondent A von dem Korrespondenten B eine Nachricht empfängt, welche eine zweite Exponentialfunktion der Form $\alpha^y$ enthält, wobei y eine von dem Korrespondenten B ausgewählte zweite Zufallsganzzahl ist,
dass der Korrespondent A den Sitzungsschlüssel K durch Potenzieren öffentlicher Information des Korrespondenten B mit der Signatur $s_A$ anlegt,
wobei die Signatur $s_A$ von dem Korrespondenten A nicht übermittelt wird und
wobei die Signatur $s_A$ des Korrespondenten A von der Form aus einem der Folgenden ist:

$$x + \overline{r_A} a \bmod G;$$

$$x + r_A a \bmod G;$$

wobei $r_A$ die Exponentialfunktion ist, $\overline{r_A}$ eine von der Exponentialfunktion abgeleitete Ganzzahl ist, $p_B$ ein öffentlicher Schlüssel des Korrespondenten B ist und G eine Ordnung des Generators $\alpha$ ist.

**2.** Verfahren nach Anspruch 1, wobei die von dem Korrespondenten A gesendete Nachricht eine Identifizierung des Korrespondenten A enthält.

**3.** Verfahren nach einem der Ansprüche 1 oder 2, wobei die von dem Korrespondenten A empfangene Nachricht eine Identifizierung des Korrespondenten B enthält.

**4.** Verfahren nach einem der vorhergehenden Ansprüche, wobei die erste Zufallsganzzahl x und die zweite Zufallsganzzahl y so gewählt werden, dass $1 \leq x \leq G-1$ und $1 \leq y \leq G-1$.

**5.** Verfahren nach einem der vorhergehenden Ansprüche, wobei der Generator $\alpha$ ein Generator einer multiplikativen Gruppe $Z^*_p$ ist, wobei p eine Primzahl ist.

**6.** Verfahren nach Anspruch 5, wobei der Sitzungsschlüssel K von der Form $\alpha^{s_A s_B}$ ist, wobei $s_B$ eine Signatur ist, die von dem Korrespondenten B erzeugt und durch Kombinieren der zweiten Zufallsganzzahl y, der zweiten Exponentialfunktion und eines privaten Schlüssels b des Korrespondenten B erhalten wird.

**7.** Verfahren nach einem der Ansprüche 1 bis 4, wobei der Generator $\alpha$ ein Punkt P auf einer elliptischen Kurve ist, die über einem finiten Feld Fq definiert ist, und wobei das Potenzieren durch Skalarmultiplikation auf der elliptischen Kurve durchgeführt wird.

**8.** Verfahren nach Anspruch 7, wobei die Signatur $s_A$ durch Verwenden einer Bitkette einer Koordinate der ersten Exponentialfunktion erzeugt wird.

**9.** Verfahren nach Anspruch 8, wobei die Bitkette Bits der x-Koordinate der ersten Exponentialfunktion aufweist.

**10.** Verfahren nach Anspruch 9, wobei die Bits der x-Koordinate niedrigstwertige Bits sind.

**11.** Verfahren nach Anspruch 10, wobei die Bits der x-Koordinate die 8o niedrigstwertigen Bits sind.

**12.** Verfahren nach einem der Ansprüche 8 bis 11, wobei der Sitzungsschlüssel K von der Form $s_A s_B P$ ist, wobei $s_B$ eine Signatur ist, die von dem Korrespondenten B erzeugt und durch Kombinieren der zweiten Zufallsganzzahl y, der zweiten Exponentialfunktion und eines privaten Schlüssels b des Korrespondenten B erhalten wird.

**13.** Verfahren nach einem der Ansprüche 8 bis 12, wobei der Punkt P von einer Primordnung ist.

**14.** Verfahren nach Anspruch 7, wobei der Korrespondent A den Sitzungsschlüssel K durch Errechnen von $s_A(r_B + \overline{r_B} p_B)$ anlegt, wobei $r_B$ die zweite Exponentialfunktion ist und $\overline{r_B}$ eine von der zweiten Exponentialfunktion abgeleitete Ganzzahl ist.

**15.** Verfahren nach einem der Ansprüche 8 bis 14, wobei die Arithmetik mit Arithmetik auf einer elliptischen Kurve ersetzt wird, die über einem finiten Feld definiert ist.

**16.** Kryptografische Einheit zum Durchführen des Verfahrens nach einem der vorhergehenden Ansprüche.

**17.** Vorrichtung mit der kryptografischen Einheit nach Anspruch 16.

## Revendications

**1.** Procédé d'établissement d'une clef de session K chez un correspondant A dans un système de communication de données à clefs publiques, la clef de session K étant destinée à être utilisée dans une communication avec un correspondant B sur un canal de communication, ledit correspondant A possédant une clef privée a et une clef publique $p_A$, ladite clef publique $p_A$ étant dérivée d'un générateur $\alpha$ dans un groupe et de ladite clef privée a, ledit procédé comprenant les étapes consistant à :

sélectionner par ledit correspondant A un premier entier aléatoire x et réaliser l'exponentiation dudit générateur $\alpha$ pour obtenir une première fonction exponentiée de la forme $\alpha^x$ ;
produire une signature $s_A$ par ledit correspondant A en combinant ledit entier aléatoire x, ladite fonction exponentiée et ladite clef privée a ;
envoyer par ledit correspondant A audit correspondant B un message contenant ladite première fonction exponentiée ;
recevoir par ledit correspondant A en provenance dudit correspondant B un message contenant une seconde fonction exponentiée de la forme $\alpha^y$, y étant un second entier aléatoire sélectionné par ledit correspondant B ;
construire par ledit correspondant A ladite clef de session K en réalisant l'exponentiation des informations publiques dudit correspondant B avec ladite signature $s_A$ ;
dans lequel ladite signature $s_A$ n'est pas transmise par ledit correspondant A ; et
dans lequel ladite signature $s_A$ dudit correspondant A est de l'une des formes suivantes :

$$x + /r_A \ a \bmod G ;$$

$$x + r_A a \bmod G ;$$

dans lequel $r_A$ est ladite fonction exponentiée, $/r_A$ est un entier dérivé de ladite fonction exponentiée, $p_B$ est une clef publique dudit correspondant B et G est un ordre dudit générateur $\alpha$.

**2.** Procédé selon la revendication 1, dans lequel ledit message dudit correspondant A comprend une identification dudit correspondant A.

**3.** Procédé selon l'une quelconque des revendications 1 et 2, dans lequel ledit message reçu par ledit correspondant A comprend une identification dudit correspondant B.

**4.** Procédé selon l'une quelconque des revendications précédentes, dans lequel ledit premier entier aléatoire x et ledit second entier aléatoire y sont sélectionnés de manière à avoir $1 \leq x \leq G - 1$ et $1 \leq y \leq G - 1$.

**5.** Procédé selon l'une quelconque des revendications précédentes, dans lequel ledit générateur $\alpha$ est un générateur d'un groupe multiplicatif $Z^*_p$, où p est un nombre premier.

**6.** Procédé selon la revendication 5, dans lequel ladite clef de session K est de la forme $\alpha^{s_A s_B}$, où $s_B$ est une signature produite par ledit correspondant B et obtenue en combinant ledit second entier aléatoire y, ladite seconde fonction exponentiée et une clef privée b dudit correspondant B.

**7.** Procédé selon l'une quelconque des revendications 1 à 4, dans lequel ledit générateur $\alpha$ est un point P sur une courbe elliptique définie sur un corps fini Fq et dans lequel l'exponentiation est effectuée par une multiplication scalaire sur ladite courbe elliptique.

**8.** Procédé selon la revendication 7, dans lequel ladite signature $s_A$ est produite en utilisant une chaîne de bits d'une coordonnée de ladite première fonction exponentiée.

**9.** Procédé selon la revendication 8, dans lequel ladite chaîne de bits comprend des bits de la coordonnée x de ladite première fonction exponentiée.

**10.** Procédé selon la revendication 9, dans lequel lesdits bits de la coordonnée x sont des bits de poids faible.

**11.** Procédé selon la revendication 10, dans lequel lesdits bits de la coordonnée x sont les 80 bits de poids faible.

**12.** Procédé selon l'une quelconque des revendications 8 à 11, dans lequel ladite clef de session K est de la forme $s_A s_B P$, où $s_B$ est une signature produite par ledit correspondant B et obtenue en combinant ledit second entier aléatoire y, ladite seconde fonction exponentiée et une clef privée b dudit correspondant B.

**13.** Procédé selon l'une quelconque des revendications 8 à 12, dans lequel le point P est d'ordre premier.

**14.** Procédé selon la revendication 7, dans lequel ledit correspondant A construit ladite clef de session K en calculant $s_A$ ($r_B$ + /$r_B$ $p_B$), où $r_B$ est ladite seconde fonction exponentiée et /$r_B$ est un entier rédivé de ladite seconde fonction exponentiée.

**15.** Procédé selon l'une quelconque des revendications 8 à 14, dans lequel l'arithmétique est remplacée par une arithmétique sur une courbe elliptique définie sur un corps fini.

**16.** Unité cryptographique destinée à exécuter le procédé selon l'une quelconque des revendications précédentes.

**17.** Dispositif comprenant l'unité cryptographique selon la revendication 16.

MESSAGE
(PLAIN TEXT)
A
SENDER
ENCRYPT
16
KEY
20
10
CIPHER TEXT
14
COMMUNICATION
CHANNEL
EAVESDROPPER
E
KEY
20
DECRYPT
18
B
RECEIVER
MESSAGE
12

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0639907 A

### Non-patent literature cited in the description

- **MATSUMOTO et al.** On seeking Smart Public Key-Distribution Systems. *IEICE TRANSACTIONS (1976-1990),* 20 February 1986, vol. E69-E (2), 99-106